# EUROPÄISCHE PATENTSCHRIFT

(11) **EP 3 527 549 B1**
(45) Veröffentlichungstag und Bekanntmachung des Hinweises auf die Patenterteilung: **09.03.2022**
(21) Anmeldenummer: 18157187.8
(22) Anmeldetag: 16.02.2018
(51) Int. Cl.: C05F 7/00, C05B 17/00, C05C 11/00

(54) **ORGANISCH-MINERALISCHER PHOSPHOR-DÜNGER UND DESSEN HERSTELLUNG**
ORGANOMINERAL PHOSPHORUS FERTILIZER AND PRODUCTION OF SAME
ENGRAIS DE PHOSPHORE ORGANOMINÉRAL ET SA PRODUCTION

(43) Veröffentlichungstag der Anmeldung: 21.08.2019
(73) Patentinhaber: Pauly, Udo, 37133 Friedland (DE)
(72) Erfinder: Pauly, Udo, 37133 Friedland (DE); Weidelt, Susanne, 33104 Paderborn (DE); Peitzmeier, Martin, 37216 Witzenhausen (DE); Rehfus, Stefan, 37085 Göttingen (DE)
(74) Vertreter: REHBERG HÜPPE + PARTNER

(56) Entgegenhaltungen:
- WO-A2-2006/138383
- US-A1- 2007 044 526
- US-A1- 2010 199 514

## Beschreibung

### TECHNISCHES GEBIET DER ERFINDUNG

Die Erfindung bezieht sich auf einen Dünger aus einem stickstoff- und phosphorhaltigen organischen Bestandteil einerseits und einem mineralischen Bestandteil andererseits. Weiterhin bezieht sich die Erfindung auf ein Verfahren zur Herstellung eines solchen Düngers mit den Schritten Behandeln von Schlamm, wobei organische Inhaltsstoffe des Schlamms unter Stickstofffreisetzung teilweise biologisch abgebaut werden, wodurch ein Schlammprodukt hergestellt wird, und Vermischen des Schlammprodukts mit einem mineralischen Zuschlag.

### STAND DER TECHNIK

Die Entsorgung von Schlämmen aus kommunalen und industriellen Abwasseraufbereitungsanlagen als Düngemittel in der Landwirtschaft ist nur in den Grenzen des deutschen Düngerechts und entsprechender Vorgaben in anderen Ländern zulässig. Trotz wertvoller Inhaltsstoffe ist dadurch die Verwertbarkeit verschiedener solcher Schlämme als Düngemittel in Frage gestellt. Zudem ist das grundsätzlich zulässige Ausbringen bestimmter Schlämme als Düngemittel aufgrund ihrer Inhaltsstoffe auf bestimmte Kalenderzeiträume beschränkt. Dies gilt insbesondere für stickstoffhaltige Schlämme mit einem Anteil von mehr als 1,5 % der Trockenmasse des Schlamms.

Aus der WO 89/06486 A1 ist ein Verfahren zum Verwerten von Klärschlämmen bekannt, bei dem ein entwässernder Klärschlamm zusammen mit wasserspeichernden und wasserabsorbierenden Mitteln sowie mit zum Wachstum und zum Schutz von Pflanzen notwendigen Ingredienzien und Mikroorganismen mit einem Schößling in einem Sack verbracht wird, der in eine Pflanzgrube eingegraben wird. Dadurch wird eine Kontaminierung des umgebenden Erdreichs durch in dem entwässerten Klärschlamm enthaltene Schwermetalle vermieden. Neben den wasserspeichernden und wasserabsorbierenden Mitteln wird der Klärschlamm mit Kalksplitt vermengt. Dieses bekannte Verfahren ist extrem aufwändig und lässt keine ökonomische Verwendung größerer Mengen an Klärschlamm zu.

Aus der EP 2 918 552 A1 ist ein Verfahren zur Abtrennung von Feststoffen und Rückgewinnung von Phosphaten aus wässrigen Suspensionen bekannt. Die Phosphate werden konzentriert, indem die Suspensionen in ein mit Pflanzen bewachsenes Vererdungsbecken eingeleitet und darin zu Klärschlammerde vererdet werden. Aus dem Vererdungsbecken wird intermittierend eine wässrige Lösung abgezogen, in der die Phosphate konzentriert sind und aus der die Phosphate ausgefällt werden.

Aus der DE 35 18 905 A1 ist ein Verfahren zur Herstellung eines organisch-mineralischen Mischdüngers mit dem Ziel bekannt, Klärschlamm so aufzubereiten, dass er als ungefährlicher Mischdünger verwertbar ist. Dazu wird der vorentwässerte Klärschlamm mit Kalk vermischt und anschließend mit Fehlsubstanzen ersetzenden bzw. Düngebedarfslücken schließenden Zusätzen versetzt. Anschließend erfolgt eine Wärmebehandlung und Granulierung. Bezogen auf seinen Trockensubstanzgehalt werden dem Klärschlamm 20 bis 50 % Kalk zugesetzt. Als Kalk wird kohlensaurer Kalk oder Rückstandskalk aus der Zuckerindustrie verwendet. Als Düngebedarfslücken schließende Zusätze werden dem Schlammprodukt u. a. Phosphate und Stickstoff zugesetzt. Dieses bekannte Verfahren ist energieintensiv und führt nur mit einem großen Aufwand zu einem Düngemittel, das keinen engen Verwendungsbeschränkungen unterliegt.

Aus der US 2007 / 0 044 526 A1 ist ein Verfahren zur Umwandlung von Schlamm in einen granulierten Dünger vom Stickstoff-Phosphor-Kalium-Typ bekannt. Durch einen Filtrationsschritt wird der Wassergehalt des Schlamms auf 50 % reduziert. Dann wir der Schlamm durch Erhitzen auf eine Temperatur von 70 % desinfiziert. Phosphorsäure enthaltende Säure wird zugesetzt um pathogene Mikroorganismen zu zerstören. Die Säure wird mit Kalk neutralisiert, und das resultierte Produkt wird getrocknet und granuliert. Das resultierende Produkt kann 11,5 % Stickstoff als N und 36 % Phosphor als P₂O₅ oder 10 % Stickstoff als N und 30 % Phosphor als P₂O₅ oder 10 % als N, 25 % Phosphor als P₂O₅ und 5 % Kalium als K₂O enthalten.

Aus der WO 2006 / 138 383 A2 und der US 2010 / 0 199 514 A1 ist ein Verfahren zur Aufbereitung von Gülle bekannt. Dabei wird eine Komponente A von der Gülle abgepresst. Eine Komponente B wird nach dem Zusetzen von Flockungsmittel abgefiltert. Nach einer Elektrokoagulation fällt eine Komponente C an. Eine Komponente D der Gülle wird beim anschließenden Klären des Überstands gewonnen. Die Komponente mit dem größten Phosphorgehalt ist die Komponente C, zu der die Angaben 45 % P (400 mg/L) und 10% N (560 mg/L) gemacht werden. Die verschiedenen Komponenten werden gemischt, um einen Dünger mit einem gewünschten Stickstoff zu Phosphorverhältnis von beispielsweise 7:1 herzustellen.

### AUFGABE DER ERFINDUNG

Der Erfindung liegt die Aufgabe zugrunde, einen Dünger aus einem stickstoff- und phosphorhaltigen organischen Bestandteil und einem mineralischen Bestandteil sowie ein Verfahren zu seiner Herstellung aufzuzeigen, die ohne größere Einschränkungen durch die Vorgaben des Düngerechts eine sinnvolle Verwendung von verschiedenen Schlämmen insbesondere aus kommunalen und industriellen Abwasserentsorgungsanlagen und auch aus anderen schlammproduzierenden Anlagen wie zum Beispiel Fermentern von Biogasanlagen ermöglichen.

### LÖSUNG

Die Aufgabe der Erfindung wird durch einen Dünger mit den Merkmalen des unabhängigen Patentanspruchs 1 und ein Verfahren mit den Merkmalen des unabhängigen Patentanspruchs 6 gelöst. Die abhängigen Patentansprüche 2 bis 5 betreffen bevorzugte Ausführungsformen des erfindungsgemäßen Düngers, während die abhängigen Patentansprüche 7 bis 15 bevorzugte Ausführungsformen des erfindungsgemäßen Verfahrens betreffen.

### BESCHREIBUNG DER ERFINDUNG

Bei einem erfindungsgemäßen Dünger aus einem stickstoff- und phosphorhaltigen organischen Bestandteil und einem mineralischen Bestandteil ist der organische Bestandteil ein Schlammprodukt, das durch teilweisen stickstoff-freisetzenden biologischen Teilabbau organischer Inhaltsstoffe aus einem Schlamm hergestellt ist. Dabei ist ein rechnerisch um 3,0 Prozentpunkte reduzierter prozentualer P₂O₅-Anteil an der Trockenmasse des Schlammprodukts mehr als doppelt so groß wie ein rechnerisch um 1,5 Prozentpunkte reduzierter prozentualer Stickstoffanteil an der Trockenmasse des Schlammprodukts, und ein prozentualer P₂O₅-Anteil an einer Gesamttrockenmasse des Schlammprodukts und des mineralischen Bestandteils beträgt mehr als 3,0 %, während ein prozentualer Stickstoffanteil an der Gesamtmasse des Schlammprodukts und des mineralischen Bestandteils weniger als 1,5 % beträgt.

Bei dem Schlamm, aus dem das Schlammprodukt hergestellt ist, kann es sich grundsätzlich um jeden Schlamm mit organischen Inhaltsstoffen und einem ausreichend hohen P₂O₅-Anteil handeln. Insbesondere kann der Schlamm aus kommunalen und industriellen Abwasserentsorgungsanlagen und auch aus anderen schlammproduzierenden Anlagen wie zum Beispiel Fermentern von Biogasanlagen stammen.

Soweit in dieser Beschreibung und den anhängenden Ansprüchen von einem prozentualen Anteil die Rede ist, wird dieser in Gewichtsprozent angegeben. Dies ergibt sich auch daraus, dass sich der jeweilige prozentuale Anteil auf eine Trockenmasse und damit eine Masse bezieht.

Weil bei dem erfindungsgemäßen Dünger der organische Bestandteil ein Schlammprodukt ist, dessen rechnerisch um 3,0 Prozentpunkte reduzierter prozentualer P₂O₅-Anteil an der Trockenmasse mehr als doppelt so groß ist wie ein rechnerisch um 1,5 Prozentpunkte reduzierter prozentualer Stickstoffanteil an der Trockenmasse des Schlammprodukts, kann der Dünger allein aufgrund seines zusätzlichen mineralischen Bestandteils einen auf weniger als 1,5 % reduzierten prozentualen Stickstoffanteil an seiner Gesamttrockenmasse aufweisen, so dass der Stickstoffanteil nicht ausgewiesen werden muss und der Dünger kein starken Verwendungsbeschränkungen unterliegender Stickstoff-Dünger ist. Zugleich senkt der zum Absenken des Stickstoffgehalts notwendige mineralische Bestandteil den prozentualen P₂O₅-Anteil an der Gesamttrockenmasse des Düngers nicht unter 3,0 %, so dass der Dünger als Phosphat-Dünger qualifiziert.

Der für den erfindungsgemäßen Dünger ausreichend große P₂O₅-Anteil und ausreichend kleine Stickstoffanteil an der Trockenmasse des Schlammprodukts sind das Ergebnis des stickstoff-freisetzenden biologischen Teilabbaus organischer Inhaltsstoffe des Schlamms, aus dem das Schlammprodukt hergestellt ist. Dieser Teilabbau der organischen Inhaltsstoffe reduziert die Trockenmasse und in zumindest etwa gleichem Maße auch den absoluten Stickstoffanteil an dem Schlammprodukt, so dass der prozentuale Stickstoffanteil an der Trockenmasse des Schlammprodukts zumindest in etwa gleichbleibt, vorzugsweise sogar abnimmt. Zugleich bleibt der absolute P₂O₅-Anteil an dem Schlammprodukt gleich oder nimmt nur wenig ab, so dass sich der prozentuale P₂O₅-Anteil an der abnehmenden Trockenmasse des Schlammprodukts erhöht. So wird allein durch den stickstoff-freisetzenden biologischen Teilabbau organischer Inhaltsstoffe ermöglicht, den Schlamm als Bestandteil eines organisch-mineralischen Phosphor-Düngers zu verwenden, der außer dem Schlammprodukt nur aus dem mineralischen Bestandteil besteht. Auf diese Weise können viele Schlämme, insbesondere Klärschlämme aus kommunalen und industriellen Abwasseraufbereitungsanlagen für die Herstellung von Düngemitteln verwendet werden, die nach der Düngemittelverordnung keinen großen Verwendungsbeschränkungen unterliegen.

Soweit strengere Anforderungen an die Zusammensetzung des Düngers gestellt werden, beispielsweise ein höherer prozentualer P₂O₅-Anteil an seiner Gesamttrockenmasse als 3 % und/oder ein niedrigerer prozentualer Stickstoffanteil an seiner Gesamttrockenmasse als 1,5 %, ist für das Schlammprodukt die folgende Vorgabe einzuhalten: Ein rechnerisch um die Prozentpunkte einer vorgegebenen prozentualen Phosphatuntergrenze reduzierter prozentualer P₂O₅-Anteile an der Trockenmasse muss mehr als x-mal so groß sein wie ein rechnerisch um die Prozentpunkte einer vorgegebenen prozentualen Stickstoffobergrenze reduzierter prozentualer Stickstoffanteil an der Trockenmasse des Schlammprodukts, wobei x der Quotient aus der vorgegebenen prozentualen Phosphatuntergrenze und der vorgegebenen prozentualen Stickstoffobergrenze ist. Dann kann durch die zugegebene Masse des mineralischen Bestandteils ein prozentualer P₂O₅-Anteil an einer Gesamttrockenmasse des Schlammprodukts und des mineralischen Bestandteils, d. h. des Düngers, größer als die vorgegebene prozentuale Phosphatuntergrenze und zugleich ein prozentualer Stickstoffanteil an der Gesamttrockenmasse des Düngers kleiner als die vorgegebene prozentuale Stickstoffobergrenze eingestellt werden.

Vorzugsweise handelt es sich bei dem mineralischen Bestandteil um kohlensauren Kalk. Verwendbar sind auch Branntkalk, Mischkalk, Hüttenkalk, Konverterkalk oder anderer Düngekalk. Kohlensaurer Kalk ist aufgrund seiner Boden verbessernden Eigenschaften und seiner unproblematischen Handhabung bevorzugt.

Das Schlammprodukt in dem erfindungsgemäßen Dünger kann eine Klärschlammerde, d. h. einen vererdeten Klärschlamm, und/oder einen Kompost und/oder zerkleinerte Pflanzenteile enthalten. Ausgangsstoff einer Vererdung und/oder Kompostierung, die zu dem Schlammprodukt führt, kann außer Klärschlamm auch ein sonstiger Schlamm, d. h. schlammförmiger Reststoff mit organischen Inhaltsstoffen sein, wie z. B. Gülle oder Gärrückstand. Bei einer Klärschlammvererdung und einer Kompostierung erfolgt ein Stickstoff-freisetzender biologischer Teilabbau der organischen Inhaltsstoffe des vererdeten bzw. kompostierten Schlamms. Bislang nur zerkleinerte und noch nicht kompostierte Pflanzenteile in dem Schlammprodukt können Rückstände eines Stickstoff-freisetzenden biologischen Teilabbaus organischer Inhaltsstoffe des Schlamms durch Austreibenlassen von Grünmasse sein. Vorzugsweise ist eine solche ausgetriebene Grünmasse bei dem Schlammprodukt als Bestandteil des erfindungsgemäßen Düngers jedoch kompostiert, d. h. aerob verrottet, oder durch mechanisches Abtrennen entfernt.

Vorzugsweise ist der erfindungsgemäße Dünger frei von zugesetzten Phosphaten, d. h. sein P₂O₅-Anteil beruht ausschließlich aus P₂O₅ aus dem durch Stickstoff-freisetzenden biologischen Teilabbau organischer Inhaltsstoffe aus dem Schlamm hergestellten Schlammprodukt.

Bei einem erfindungsgemäßen Verfahren eines Düngers mit den Schritten Behandeln von Schlamm, wobei organische Inhaltsstoffe des Schlamms unter Stickstoff-Freisetzung teilweise biologisch abgebaut werden, wodurch ein Schlammprodukt hergestellt wird, und Vermischen des Schlammprodukts mit einem mineralischen Zuschlag, werden ein prozentualer P₂O₅-Anteil und ein prozentualer Stickstoffanteil an der Trockenmasse des Schlammprodukts bestimmt und wird das Schlammprodukt nicht eher mit dem mineralischen Zuschlag vermischt, als dass der rechnerisch um 3,0 Prozentpunkte reduzierte prozentuale P₂O₅-Anteil an der Trockenmasse des Schlammprodukts mehr als doppelt so groß ist wie der rechnerisch um 1,5 Prozentpunkte reduzierte prozentuale Stickstoffanteil an der Trockenmasse des Schlammprodukts. Zudem wird der mineralische Zuschlag in einer solchen Masse mit dem Schlammprodukt vermischt, dass ein prozentualer P₂O₅-Anteil an einer Gesamttrockenmasse des Düngers mehr als 3,0 % beträgt, während ein prozentualer Stickstoffanteil an der Gesamttrockenmasse des Düngers weniger als 1,5 % beträgt.

Für den Schlamm, der Ausgangsstoff des erfindungsgemäßen Verfahrens ist, gilt dasselbe wie für den Schlamm, auf dem das Schlammprodukt in dem erfindungsgemäßen Dünger basiert.

Die Masse des mineralischen Zuschlags, die bei dem erfindungsgemäßen Verfahren mit dem Schlammprodukt vermischt wird, muss die folgenden Bedingungen erfüllen: Sie muss größer sein als der absolute Stickstoffanteil an dem Schlammprodukt geteilt durch eine vorgegebene prozentuale Stickstoffobergrenze an der Gesamttrockenmasse des Düngers minus der Trockenmasse des Schlammprodukts. Das heißt von dem Quotienten aus dem absoluten Stickstoffanteil und der prozentualen Stickstoffobergrenze ist die Trockenmasse des Schlammprodukts abzuziehen. Zugleich muss die Masse des mineralischen Zuschlags kleiner sein als der absolute P₂O₅-Anteil an dem Schlammprodukt geteilt durch eine vorgegebene prozentuale Phosphatuntergrenze an der Gesamttrockenmasse des Düngers minus der Trockenmasse des Schlammprodukts. Hier ist also die Trockenmasse des Schlammprodukts vorn dem Quotienten aus dem absoluten P₂O₅-Anteil und der prozentualen Phosphatuntergrenze abzuziehen. Diese Bemaßungen gelten für beliebige prozentuale Phosphatuntergrenzen und prozentuale Stickstoffobergrenzen, auch wenn sie höher als 3,0 % bzw. niedriger als 1,5 % sind.

Es empfiehlt sich, das erfindungsgemäße Verfahren so durchzuführen, dass das Schlammprodukt erst dann mit dem mineralischen Zuschlag vermischt wird, wenn der rechnerisch um 3,0 Prozentpunkte reduzierte prozentuale P₂O₅-Anteil an der Trockenmasse des Schlammprodukts um mehr als (2+z)- mal so groß ist wie der rechnerisch um 1,5 Prozentpunkte reduzierte prozentuale Stickstoffanteil an der Trockenmasse des Schlammprodukts, wobei z ein Sicherheitszuschlag ist. Dieser Sicherheitszuschlag stellt sicher, dass auch bei Schwankungen des prozentualen P₂O₅-Anteils und des prozentualen Stickstoffanteils an der Trockenmasse des Schlammprodukts die vorgegebene prozentuale P₂O₅-Untergrenze von 3 % und die vorgegebene Stickstoffobergrenze von 1,5 % bei dem nach dem erfindungsgemäßen Verfahren hergestellten Dünger eingehalten werden. Konkret kann der dimensionslose Sicherheitszuschlag z 0,1, 0,2, 0,3, 0,4 oder 0,5 betragen.

Das biologische Behandeln des Schlamms um seine organischen Inhaltsstoffe Stickstofffreisetzend teilweise abzubauen kann insbesondere ein Vererden in einem mit Pflanzen bewachsenen Vererdungsbecken umfassen. Durch Vererden von Klärschlamm in einem Vererdungsbecken wird Klärschlammerde gewonnen, die bekanntermaßen hygienisch unbedenklich ist und die - soweit Phosphat nicht gezielt gemäß der EP 2 918 552 A2 abgezogen wurde - einen relativ hohen Phosphatgehalt aufweist. Klärschlammerde ist daher als Schlammprodukt für die Herstellung eines organisch-mineralischen Phosphor-Düngers besonders geeignet.

Das biologische Behandeln des Schlamms kann alternativ oder zusätzlich ein Kompostieren und/oder ein Aufschütten zu einer Miete und/oder ein Umsetzen einer Miete, zu der der Schlamm aufgeschüttet wurde und/oder ein Austreibenlassen von Grünmasse aus dem Schlamm oder einer solchen Miete und/oder ein Zerkleinern und Einarbeiten ausgetriebener Grünmasse in den Schlamm oder eine daraus aufgeschüttete Miete, insbesondere mit nachfolgendem Kompostieren der Grünmasse, und/oder ein Entfernen ausgetriebener Grünmasse umfassen. Mit dem Entfernen, d. h. dem mechanischen Abtrennen ausgetriebener Grünmasse, kann eine besonders große Reduktion des absoluten und auch des prozentualen Stickstoffanteils an der verbleibenden Trockenmasse des Schlammprodukts erreicht werden, wenn gezielt stark grünmassebildende und dabei Stickstoff aufnehmende Pflanzen, wie z. B. Raps, eingesät oder angepflanzt und ausgetrieben werden. Die austreibende Grünmasse nimmt zwar auch Phosphate auf, diese eingesäten oder angepflanzten Pflanzen können aber so gewählt werden, dass der prozentuale P₂O₅-Anteil an der Trockenmasse des Schlammprodukts nicht zurückgeht oder dieser Rückgang zumindest viel kleiner ausfällt als derjenige des prozentualen Stickstoffanteils.

Auch um beim Austreibenlassen von Grünmasse aus dem Schlamm das Austreiben von Pflanzen zu unterdrücken, die in der Landwirtschaft als Unkräuter angesehen werden, kann der Schlamm mit Samen oder Rhizomen von bestimmten Pflanzen beimpft werden. Konkret können dafür Pflanzen mit geringem oder gar verschwindendem Unkrautpotential, wie z. B. Senf, ausgewählt werden. Es können auch gezielt nicht-Stickstoff-bindende Pflanzen eingesät oder angepflanzt werden, die dann in das restliche Klärschlammprodukt eingearbeitet und/oder kompostiert werden können.

Wie hier bereits angedeutet wurde, ist es bei dem erfindungsgemäßen Verfahren bevorzugt, wenn während des biologischen Behandeln des Schlamms keine Phosphor-haltigen Substanzen abgezogen werden, d. h. insbesondere keine wässrigen Lösungen mit erhöhter Phosphor-Konzentration, die in bestimmten Phasen der biologischen Behandlung anfallen können.

Sogleich ist es bei dem erfindungsgemäßen Verfahren bevorzugt, wenn dem Schlamm und dem Schlammprodukt keine Phosphate künstlich zugesetzt werden.

Für die Handhabung des erfindungsgemäß hergestellten Düngers ist es von Vorteil, wenn das Schlammprodukt vor dem oder beim Vermischen mit dem mineralischen Zuschlag zerkleinert wird. Das Schlammprodukt muss bei dem erfindungsgemäßen Verfahren nicht zwingend in einem separaten Schritt zerkleinert werden. Eine ausreichende Zerkleinerung kann sich bereits durch mehrfaches Anfassen/Manipulieren des Schlammprodukts mit einer Bagger- oder Radladerschaufel ergeben.

Der mineralische Zuschlag, der bei dem erfindungsgemäßen Verfahren zum Einsatz kommt, ist wie bei dem erfindungsgemäßen Dünger vorzugsweise kohlensaurer Kalk. Eingesetzt werden können aber auch Branntkalk, Mischkalk, Hüttenkalt, Konverterkalk oder anderer Düngekalk.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Schlamm die Rede ist, ist dies so zu verstehen, dass genau ein Schlamm, zwei Schlämme oder mehr Schlämme vorhanden sind. Die in den Patentansprüchen angeführten Merkmale können durch andere Merkmale ergänzt werden oder die einzigen Bestandteile bzw. Schritte sein, die der jeweilige Dünger oder das jeweilige Verfahren aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Flussdiagramm einer Ausführungsform des erfindungsgemäßen Verfahrens und
- **Fig. 2**: ist ein Flussdiagramm einer Ausführungsform eines biologischen Teilabbaus von organischen Inhaltsstoffen eines Schlamms im Rahmen des Verfahrens gemäß Fig. 1.

### FIGURENBESCHREIBUNG

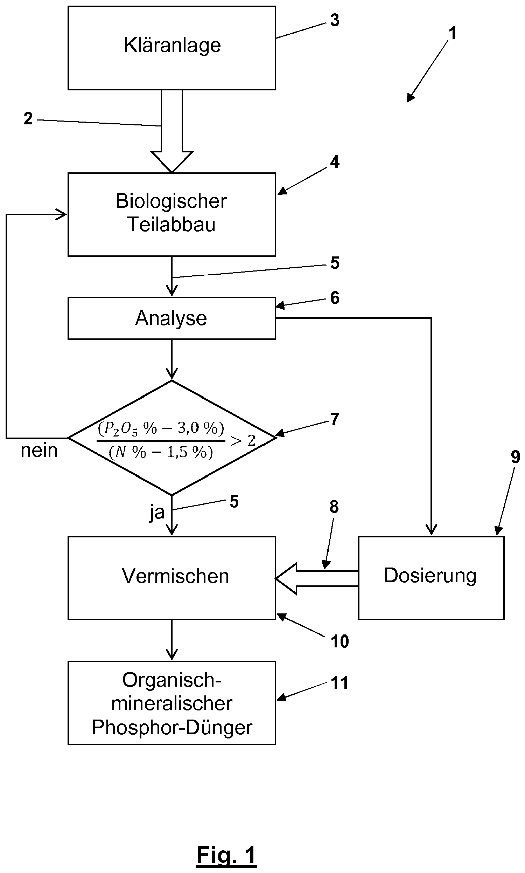

Das in **Fig. 1** illustrierte erfindungsgemäße Verfahren 1 geht von einem Klärschlamm 2 aus einer kommunalen oder industriellen Kläranlage 3 aus. Der Klärschlamm 2 wird einem biologischen Teilabbau 4 seiner organischen Inhaltsstoffe zugeführt. Der biologische Teilabbau 4 erfolgt so, dass dabei Stickstoff freigesetzt wird, so dass ein prozentualer Anteil des Stickstoffs an der Trockenmasse des Klärschlamms 2 bzw. eines daraus hergestellten Schlammprodukts 5 trotz der abnehmenden Trockenmasse im Wesentlichen gleichbleibt oder sogar abnimmt. Ein gleichbleibender absoluter Anteil von P₂O₅ an dem Klärschlamm 2 führt bei der abnehmenden Trockenmasse zu einem zunehmenden prozentualen P₂O₅-Anteil an dem Schlammprodukt 5. In einer Analyse 6 wird das Schlammprodukt 5 auf den erreichten prozentualen P₂O₅-Anteil an seiner Trockenmasse und den prozentualen Stickstoffanteil an seiner Trockenmasse analysiert. Dann wird in einer Überprüfung 7 festgestellt, ob der rechnerisch um 3,0 Prozentpunkte reduzierte prozentuale P₂O₅-Anteil an der Trockenmasse des Schlammprodukts mehr als doppelt so groß ist wie der rechnerisch um 1,5 Prozentpunkte reduzierte prozentuale Stickstoff an der Trockenmasse des Schlammprodukts 5. Wenn dies der Fall ist, erfolgt ein Vermischen des Schlammprodukts 5 mit kohlensaurem Kalk 8. Wenn die Überprüfung 7 ein negatives Ergebnis hat, erfolgt eine Fortsetzung des biologischen Teilabbaus 4. Abhängig von dem Ergebnis der Analyse 6 erfolgt eine Dosierung 9 des kohlensauren Kalks 8 derart, dass die Masse des kohlensauren Kalks 8 größer als Nabs/OGN% minus TMSP und kleiner als P₂O₅abs/UGP₂O₅% minus TMSP ist, wobei Nabs der absolute Stickstoffanteil an dem Schlammprodukt, OGN% eine vorgegebene prozentuale Stickstoffobergrenze an der Gesamttrockenmasse des Schlammprodukts 5 und des kohlensauren Kalks 8, TMSP die Trockenmasse des Schlammprodukts 5, P₂O₅abs der absolute P₂O₅-Anteil an dem Schlammprodukt 5 sowie UGP₂O₅% eine vorgegebene prozentuale Phosphatuntergrenze an der Gesamttrockenmasse des Schlammprodukts 5 und des kohlensauren Kalks 8 ist. Die vorgegebene prozentuale Phosphatuntergrenze UGP₂O₅% ist dabei nicht kleiner als 3 % und die vorgegebene prozentuale Stickstoffobergrenze OGN% ist dabei nicht größer als 1,5 %. Beim Vermischen 10 des Schlammprodukts 5 mit dem kohlensauren Kalk 8 wird das Schlammprodukt 5 auch zerkleinert. Das Resultat des Vermischens 10 ist ein organischmineralischer Phosphor-Dünger 11, der einen prozentualen P₂O₅-Anteil an seiner Gesamttrockenmasse von mehr als 3,0 % und einen prozentualen Stickstoffanteil an seiner Gesamttrockenmasse von weniger als 1,5 % aufweist.

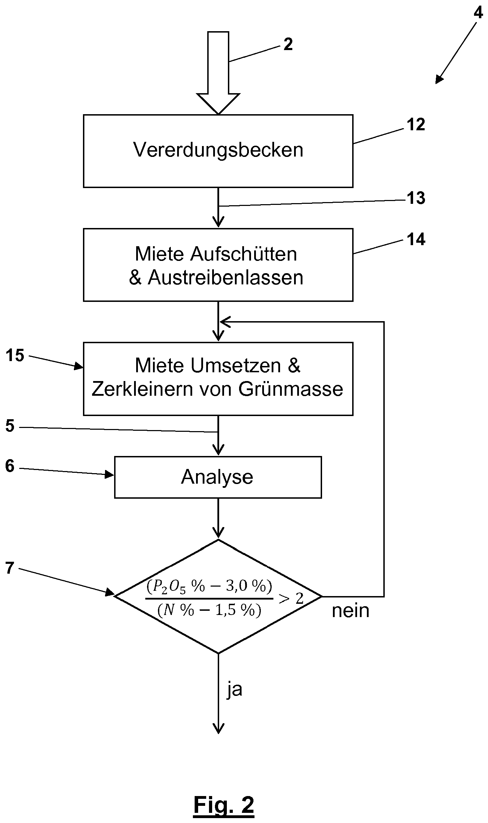

Die in **Fig. 2** skizzierte Ausführungsform des biologischen Teilabbaus 4 beginnt mit dem Einbringen des Klärschlamms 2 in ein Vererdungsbecken 12, das mit Pflanzen bewachsen ist. Aus dem Vererdungsbecken 12 entfernte Klärschlammerde 13 wird in einem Schritt 14 zu einer Miete aufgeschüttet, die liegengelassen wird, so dass Grünmasse austreiben kann. Diese Miete wird in einem Schritt 15 unter Zerkleinern der aufgewachsenen Grünmasse umgesetzt, die zerkleinerte Grünmasse kann anschließend aerob verrotten, d. h. sie wird kompostiert. Zusätzlich kann neue Grünmasse austreiben. Hieran schließen sich die Analyse 6 und die Beurteilung 7 an. Wenn die Beurteilung 7 negativ ausfällt, kann der Schritt 15 wiederholt werden. Dabei kann statt des Zerkleinerns der Grünmasse auch ein Entfernen der Grünmasse erfolgen. Weiterhin kann auf die Schritte 14 und 15 ganz verzichtet werden, wenn die Klärschlammerde 13 bereits die für das Schlammprodukt 5 geforderten Eigenschaften, d. h. den deutlich höheren prozentualen P₂O₅-Anteil als ihren prozentualen Stickstoffanteil, aufweist.

### AUSFÜHRUNGSBEISPIEL FÜR EINEN ERFINDUNGSGEMÄßEN ORGANISCH-MINERALISCHEN PHOSPOR-DÜNGER

Als organischer Bestandteil wird eine Klärschlammerde mit einem Trockenmasseanteil von 20,3 %, einem prozentualen P₂O₅-Anteil an der Trockenmasse von 11,3 % und einem prozentualen Stickstoffanteil an der Trockenmasse von 2,75 % eingesetzt. Eine Tonne Trockenmasse der Klärschlammerde enthält entsprechend einen absoluten Stickstoffanteil von 27,5 kg. Damit diese 27,5 kg absoluter Stickstoffanteil bei dem organisch-mineralischen Phosphor-Dünger nicht mehr als 1,5 % prozentualer Stickstoffanteil beträgt, muss die Gesamttrockenmasse mindestens 27,5 kg/1,5 % = 1.833 kg betragen. Entsprechend muss der mineralische Zuschlagstoff in Form des kohlensauren Kalks mit einer Trockenmasse von mindestens 833 kg zugesetzt werden. Da der rechnerisch um 3,0 % auf 8,3 % reduzierte prozentuale P₂O₅-Anteil geteilt durch den rechnerisch um 1,5 Prozentpunkte auf 1,25 % reduzierte prozentuale Stickstoffanteil deutlich größer als 2 ist, verbleibt nach dem Zusatz von 833 kg mineralischem Zuschlagstoff ein prozentuale P₂O₅-Anteil an der Gesamttrockenmasse des organisch-mineralischen Phosphor-Düngers von mehr als 3 %, in dem vorliegenden Ausführungsbeispiel von mehr als 6 %. Entsprechend kann die Masse des zugesetzten mineralischen Zuschlagstoffs auch noch über 833 kg erhöht werden, um die vorgegebene prozentuale Stickstoffobergrenze mit einem Sicherheitspuffer einzuhalten. Dann verbleibt immer noch ein Sicherheitspuffer beim Einhalten der prozentualen Phosphatuntergrenze.

### BEZUGSZEICHENLISTE

- 1: Verfahren
- 2: Klärschlamm
- 3: Kläranlage
- 4: biologischer Teilabbau
- 5: Klärschlammprodukt
- 6: Analyse
- 7: Überprüfung/Beurteilung
- 8: kohlensaurer Kalk
- 9: Dosierung
- 10: Vermischen
- 11: Dünger
- 12: Vererdungsbecken
- 13: Klärschlammerde
- 14: Miete Aufschütten & Austreiben Lassen
- 15: Miete Umsetzen und Zerkleinern von Grünmasse

## Patentansprüche

1. Dünger (11) aus einem stickstoff- und phosphorhaltigen organischen Bestandteil und einem mineralischen Bestandteil,
**dadurch gekennzeichnet, dass** der organische Bestandteil ein Schlammprodukt (5) ist, das durch Stickstoff-freisetzenden biologischen Teilabbau (4) organischer Inhaltsstoffe aus einem Schlamm (2) hergestellt ist,
- wobei ein rechnerisch um 3,0 Prozentpunkte reduzierter prozentualer P₂O₅-Anteil an der Trockenmasse des Schlammprodukts (5) mehr als doppelt so groß ist wie ein rechnerisch um 1,5 Prozentpunkte reduzierter prozentualer Stickstoffanteil an der Trockenmasse des Schlammprodukts (5) und
- wobei ein prozentualer P₂O₅-Anteil an einer Gesamttrockenmasse des Schlammprodukts (5) und des mineralischen Bestandteils mehr als 3,0 % beträgt,
- während ein prozentualer Stickstoffanteil an der Gesamttrockenmasse des Schlammprodukts (5) und des mineralischen Bestandteils weniger als 1,5 % beträgt.

2. Dünger (11) nach Anspruch 1, **dadurch gekennzeichnet,**
- **dass** ein rechnerisch um die Prozentpunkte einer vorgegebenen prozentualen Phosphatuntergrenze reduzierter prozentualer P₂O₅-Anteil an der Trockenmasse des Schlammprodukts mehr als x-mal so groß ist wie ein rechnerisch um die Prozentpunkte einer vorgegebenen prozentualen Stickstoffobergrenze reduzierter prozentualer Stickstoffanteil an der Trockenmasse des Schlammprodukts,
- wobei x der Quotient aus der vorgegebenen prozentualen Phosphatuntergrenze und der vorgegebenen prozentualen Stickstoffobergrenze ist, und
- **dass** ein prozentualer P₂O₅-Anteil an einer Gesamttrockenmasse des Schlammprodukts und des mineralischen Bestandteils größer ist als die vorgegebene prozentuale Phosphatuntergrenze,
- während ein prozentualer Stickstoffanteil an der Gesamttrockenmasse des Schlammprodukts (5) und des mineralischen Bestandteils kleiner ist als die vorgegebene prozentuale Stickstoffobergrenze,
- wobei die vorgegebene prozentuale Phosphatuntergrenze größer als 3,0 % und/oder die vorgegebene prozentuale Stickstoffobergrenze kleiner als 1,5 % ist.

3. Dünger (11) nach einem der vorhergehenden Ansprüche, **dadurch gekennzeichnet, dass** der mineralische Bestandteil kohlensaurer Kalk (8), Branntkalk, Mischkalk, Hüttenkalk, Konverterkalk oder Düngekalk ist.

4. Dünger (11) nach einem der vorhergehenden Ansprüche, **dadurch gekennzeichnet, dass** das Schlammprodukt (5) eine Klärschlammerde (13) und/oder einen Kompost und/oder zerkleinerte Pflanzenteile enthält.

5. Dünger (11) nach einem der vorhergehenden Ansprüche, **dadurch gekennzeichnet, dass** der Dünger (11) frei von zugesetzten Phosphaten ist.

6. Verfahren(1) zur Herstellung eines Düngers (11), mit den Schritten
- Behandeln von Schlamm (2), wobei organische Inhaltsstoffe des Schlamms (2) unter Stickstoff-Freisetzung teilweise biologisch abgebaut werden, wodurch ein Schlammprodukt (5) hergestellt wird, und
- Vermischen des Schlammprodukts (5) mit einem mineralischen Zuschlag,
**dadurch gekennzeichnet,**
- **dass** ein prozentualer P₂O₅-Anteil an der Trockenmasse des Schlammprodukts (5) und ein prozentualer Stickstoffanteil an der Trockenmasse des Schlammprodukts (5) bestimmt werden,
- **dass** das Schlammprodukt (5) nicht eher mit dem mineralischen Zuschlag vermischt wird, als dass der rechnerisch um 3,0 Prozentpunkte reduzierte prozentuale P₂O₅-Anteil an der Trockenmasse des Schlammprodukts (5) mehr als doppelt so groß ist wie der rechnerisch um 1,5 Prozentpunkte reduzierte prozentuale Stickstoffanteil an der Trockenmasse des Schlammprodukts (5), und
- **dass** der mineralische Zuschlag in einer solchen Masse mit dem Schlammprodukt (5) vermischt wird, dass ein prozentualer P₂O₅-Anteil an einer Gesamttrockenmasse des Düngers (11) mehr als 3,0 % beträgt,
- während ein prozentualer Stickstoffanteil an der Gesamttrockenmasse des Düngers (11) weniger als 1,5 % beträgt.

7. Verfahren (1) nach Anspruch 6, **dadurch gekennzeichnet, dass** die Masse des mineralischen Zuschlags, die mit dem Schlammprodukt (5) vermischt wird,
- größer ist als Nabs/OGN% - TMSP, wobei Nabs der absolute Stickstoffanteil an dem Schlammprodukt (5), OGN% eine vorgegebene prozentuale Stickstoffobergrenze an der Gesamttrockenmasse des Düngers (11) und TMSP die Trockenmasse des Schlammprodukts ist, und
- kleiner ist als P₂O₅abs/UGP₂O₅ - TMSP, wobei P₂O₅abs der absolute P₂O₅-Anteil an dem Schlammprodukt (5), UGP₂O₅% eine vorgegebene prozentuale Phosphatuntergrenze an der Gesamttrockenmasse des Düngers (11) und TMSP die Trockenmasse des Schlammprodukts (5) ist,
- wobei die vorgegebene prozentuale Phosphatuntergrenze nicht kleiner als 3,0 % und die vorgegebene prozentuale Stickstoffobergrenze nicht größer als 1,5 % ist.

8. Verfahren (1) nach Anspruch 6 oder 7, **dadurch gekennzeichnet, dass** das Schlammprodukt (5) erst dann mit dem mineralischen Zuschlag vermischt wird, wenn der rechnerisch um 3,0 Prozentpunkte reduzierte prozentuale P₂O₅-Anteil an der Trockenmasse des Schlammprodukts (5) um mehr als (2+z)-mal so groß ist wie der rechnerisch um 1,5 Prozentpunkte reduzierte prozentuale Stickstoffanteil an der Trockenmasse des Schlammprodukts (5), wobei z ein Sicherheitszuschlag von 0,1, 0,2, 0,3, 0,4 oder 0,5 ist.

9. Verfahren (1) nach einem der Ansprüche 6 bis 8, **dadurch gekennzeichnet, dass** das biologische Behandeln des Schlamms (2)
- ein Vererden in einem in einem mit Pflanzen bewachsenen Vererdungsbecken (12) und/oder
- ein Kompostieren und/oder
- ein Aufschütten (14) zu einer Miete und/oder
- ein Umsetzen (15) und/oder
- ein Austreibenlassen (14) von Grünmasse und/oder
- ein Zerkleinern und Einarbeiten ausgetriebener Grünmasse (15) und/oder
- ein Entfernen ausgetriebener Grünmasse (15)
umfasst.

10. Verfahren (1) nach einem der Ansprüche 6 bis 9, **dadurch gekennzeichnet, dass** der Schlamm (2) mit Samen oder Rhizomen von Pflanzen beimpft wird.

11. Verfahren (1) nach Anspruch 10, **dadurch gekennzeichnet,** das der Schlamm (2) mit Raps- oder Senfsamen beimpft wird.

12. Verfahren (1) nach einem der Ansprüche 6 bis 11, **dadurch gekennzeichnet, dass** während des biologischen Behandelns des Schlamms (2) keine Phosphor-haltigen Substanzen abgezogen werden.

13. Verfahren (1) nach einem der Ansprüche 6 bis 12, **dadurch gekennzeichnet, dass** dem Schlamm (2) und dem Schlammprodukt (5) keine Phosphate zugesetzt werden.

14. Verfahren (1) nach einem der Ansprüche 6 bis 13, **dadurch gekennzeichnet, dass** das Schlammprodukt (5) vor dem oder beim Vermischen(10) mit dem mineralischen Zuschlag zerkleinert wird.

15. Verfahren (1) nach einem der Ansprüche 6 bis 14, **dadurch gekennzeichnet, dass** der mineralische Zuschlag kohlensaurer Kalk (8), Branntkalk, Mischkalk, Hüttenkalk, Konverterkalk oder Düngekalk ist.

## Claims

1. Fertilizer (11) made of an organic component containing nitrogen and phosphor, and a mineral component,
**characterised in that** the organic component is a sludge product (5) that has been produced from a sludge (2) by nitrogen-releasing, biological partial decomposition (4) of organic ingredients,
- wherein a percentage of P₂O₅ of the dry matter of the sludge product (5), which has calculationally been reduced by 3.0 percentage points, is more than twice as high as a percentage of nitrogen of the dry matter of the sludge product (5), which has been calculationally reduced by 1.5 percentage points, and
- wherein a percentage of P₂O₅ of the total dry matter of the sludge product (5) and the mineral component is more than 3.0 %,
- whereas a percentage of nitrogen of the total dry matter of the sludge product (5) and the mineral component is less than 1.5 %.

2. Fertilizer (11) of claim 1, **characterised in**
- **that** a percentage of P₂O₅ of the dry matter of the sludge product, which has been calculationally reduced by the percentage points of a given percentaged lower phosphate limit, is x-times as high as a percentage of nitrogen of the dry matter of the sludge product, which has been calculationally reduced by the percentage points of a given percentaged upper nitrogen limit,
- wherein x is the quotient of the given percentaged lower phosphate limit and the given percentaged upper nitrogen limit, and
- **that** a percentage of P₂O₅ of the total dry matter of the sludge product and the mineral component is higher than the given percentaged lower phosphate limit,
- whereas a percentage of nitrogen of the total dry matter of the sludge product (5) and the mineral component is smaller than the given percentaged upper nitrogen limit,
- wherein the given percentaged lower phosphate limit is higher than 3.0 % and/or the given percentaged upper nitrogen limit is smaller than 1.5 %.

3. Fertilizer (11) of any of the preceding claims, **characterised in that** the mineral component is calcium carbonate (8), burnt lime, mixed lime, slag lime, converter lime or agricultural lime.

4. Fertilizer (11) of any of the preceding claims, **characterised in that** the sludge product (5) comprises a sewage sludge soil (13) and/or a compost and/or comminuted plant parts.

5. Fertilizer (11) of any of the preceding claims, **characterised in that** the fertilizer (11) is free of added phosphates.

6. Method of producing a fertilizer (11) comprising the steps of
- treating sludge (2), wherein organic ingredients of the sludge (2) are partially decomposed biologically under release of nitrogen such that a sludge product (5) is produced, and
- mixing the sludge product (5) with a mineral additive,
**characterised in**
- **that** a percentage of P₂O₅ of the dry matter of the sludge product (5) and a percentage of nitrogen of the dry matter of the sludge product (5) are determined,
- **that** the sludge product (5) is not mixed with the mineral additive before the percentage of P₂O₅ of the dry matter of the sludge product (5), which has calculationally been reduced by 3.0 percentage points, is more than twice as high as the percentage of nitrogen of the dry matter of the sludge product (5), which has been calculationally reduced by 1.5 percentage points, and
- **that** the mineral additive is mixed with the sludge product (5) at such a mass, that a percentage of P₂O₅ of the total dry matter of the sludge product (5) and the mineral component is more than 3.0 %,
- whereas a percentage of nitrogen of the total dry matter of the sludge product (5) and the mineral component is less than 1.5 %.

7. Method (1) of claim 6, **characterised in that** the mass of the mineral additive which is mixed with the sludge product (5)
- is more than Nabs/OGN% - TMSP, wherein Nabs is the absolute nitrogen part of the sludge product (5), OGN% is a given percentaged upper nitrogen limit of the total dry matter of the fertilizer (11) and TMSP is the dry matter of the sludge product (5), and
- is smaller than P₂O₅abs/UGP₂O₅ - TMSP, wherein P₂O₅abs the absolute P₂O₅ part of the sludge product (5), UGP₂O₅% is a given percentaged lower phosphate limit of the total dry matter of the fertilizer (11) and TMSP is the dry matter of the sludge product (5),
- wherein the given percentaged lower phosphate limit is not smaller than 3.0 % and the given percentaged upper nitrogen limit is not higher than 1.5 %.

8. Method (1) of claim 6 or 7, **characterised in that** the sludge product (5) is only then mixed with the mineral additive, when the percentage of P₂O₅ of the dry matter of the sludge product (5), which has been calculationally reduced by 3.0 percentage points, is more than (2+z)-times as high as the percentage of nitrogen of the dry matter of the sludge product (5), which has been calculationally reduced by 1.5 percentage points, wherein z is a safety margin of 0.1, 0.2, 0.3, 0.4 or 0.5.

9. Method (1) of any of the claims 6 to 8, **characterised in that** the biological treating of the sludge (2) includes
- converting into soil in a converting into soil-basin (12) vegetated with plants and/or
- composting and/or
- raising (14) to a pile and/or
- turning over (15) and/or
- letting come into leaf (14) of green matter and/or
- comminuting and working-in of leafed out green matter (15) and/or
- removing leafed-out green matter (15).

10. Method (1) of any of the claims 6 to 9, **characterised in that** the sludge (2) is inoculated with seeds or rhizomes of plants.

11. Method (1) of claim 10, **characterised in that** the sludge (2) is inoculated with rape or mustard seed.

12. Method (1) of any of the claims 6 to 11, **characterised in that** no phosphor-containing substances are removed during the biological treatment of the sludge (2).

13. Method (1) of any of the claims 6 to 12, **characterised in that** no phosphates are added to the sludge (2) and the sludge product (5).

14. Method (1) of any of the claims 6 to 13, **characterised in that** the sludge product (5) is comminuted prior to or when being mixed (10) with the mineral additive.

15. Method (1) of any of the claims 6 to 14, **characterised in that** the mineral additive is calcium carbonate (8), burnt lime, mixed lime, slag lime, converter lime or agricultural lime.

## Revendications

1. Engrais (11) constitué d'une partie organique contenant de l'azote et du phosphore et d'une partie minérale,
**caractérisé en ce que** la partie organique est un produit à base de boue (5) qui provient d'une décomposition partielle biologique (4) libérant de l'azote de composants organiques provenant d'une boue (2),
- dans lequel, une part en pourcentage P₂O₅, réduite par calcul de 3,0 points de pourcentage, de la masse sèche du produit à base de boue (5) représente plus du double d'une part en pourcentage d'azote, réduite par calcul de 1,5 points de pourcentage, de la masse sèche du produit à base de boue (5) et
- dans lequel une part en pourcentage de P₂O₅ d'une masse sèche totale du produit à base de boue (5) et de la partie minérale est supérieure à 3,0 %,
- tandis qu'une part en pourcentage d'azote de la masse sèche totale du produit à base de boue (5) et de la partie minérale est inférieure à 1,5 %.

2. Engrais (11) selon la revendication 1, **caractérisé en ce que**
- une part en pourcentage de P₂O₅, réduite par calcul des points de pourcentage d'une limite inférieure prédéterminée en pourcentage de phosphate de la masse sèche du produit à base de boue est plus de x fois plus grande qu'une part en pourcentage d'azote réduite par calcul des points de pourcentage d'une limite supérieure prédéterminée en pourcentage d'azote de la masse sèche du produit à base de boue,
- dans lequel x est le quotient entre la limite inférieure prédéterminée en pourcentage du phosphate et la limite supérieure prédéterminée en pourcentage d'azote et
- une part en pourcentage de P₂O₅ d'une masse sèche totale du produit à base de boue et de la partie minérale est supérieure à la limite inférieure prédéterminée en pourcentage de phosphate,
- tandis qu'une part en pourcentage d'azote de la masse sèche du produit à base de boue (5) et de la partie minérale est inférieure à la limite supérieure en pourcentage d'azote prédéterminée,
- dans lequel la limite inférieure prédéterminée en pourcentage de phosphate est supérieure à 3,0 % et/ou la limite supérieure prédéterminée en pourcentage d'azote est inférieure à 1,5 %.

3. Engrais (11) selon l'une des revendications précédentes, **caractérisé en ce que** la partie minérale est du carbonate de calcium (8), de la chaux vive, de la chaux mixte, de la chaux métallurgique, de la chaux d'aciérie ou de la chaux agricole.

4. Engrais (11) selon l'une des revendications précédentes, **caractérisé en ce que** le produit à base de boue (5) est une boue d'épuration (13) et/ou un compost et/ou des parties végétales broyées.

5. Engrais (11) selon l'une des revendications précédentes, **caractérisé en ce que** l'engrais (11) ne contient pas de phosphates ajoutés.

6. Procédé (1) pour la fabrication d'un engrais (11), avec les étapes suivantes
- traitement d'une boue (2), dans lequel les composants organiques de la boue (2) sont décomposés biologiquement partiellement en libérant de l'azote, ce qui permet d'obtenir un produit à base de boue (5) et
- mélange du produit à base de boue (5) avec un additif minéral,
**caractérisé en ce que**
- une part en pourcentage de P₂O₅ de la masse sèche du produit à base de boue (5) et une part en pourcentage d'azote de la masse sèche du produit à base de boue (5) sont déterminées,
- le produit à base de boue (5) n'est pas mélangé avec l'additif minéral avant que la part en pourcentage de P₂O₅, réduite par calcul de 3,0 points de pourcentage, de la masse sèche du produit à base de boue (5) ne soit le double de la part en pourcentage d'azote, réduite par calcul de 1,5 points de pourcentage, de la masse sèche du produit à base de boue (5) et
- l'additif minéral est mélangé avec le produit à base de boue (5) avec une masse telle qu'une part en pourcentage de P₂O₅ de la masse sèche totale de l'engrais (11) représente plus de 3,0 %
- tandis qu'une part en pourcentage d'azote de la masse sèche totale de l'engrais (11) représente moins de 1,5 %.

7. Procédé (1) selon la revendication 6, **caractérisé en ce que** la masse de l'additif minéral qui est mélangé avec le produit à base de boue (5),
- est supérieure à Nabs/OGN % - TMSP, Nabs étant la part absolue d'azote par rapport au produit à base de boue (5), OGN % étant une limite supérieure prédéterminée en pourcentage d'azote de la masse sèche totale de l'engrais (11) et TMSP étant la masse sèche du produit à base de boue et
- est inférieure à P₂O₅abs/UGP₂O₅ % - TMSP, P₂O₅abs étant la part absolue de P₂O₅ par rapport au produit à base de boue (5), UGP₂O₅ % étant une limite inférieure prédéterminée en pourcentage de P₂O₅ de la masse sèche totale de l'engrais (11) et TMSP étant la masse sèche du produit à base de boue,
- dans lequel la limite inférieure prédéterminée en pourcentage de phosphate n'est pas inférieure à 3,0 % et la limite supérieure prédéterminée en pourcentage d'azote n'est pas supérieure à 1,5 %.

8. Procédé (1) selon la revendication 6 ou 7, **caractérisé en ce que** le produit à base de boue (5) n'est mélangé avec l'additif minéral que lorsque la part en pourcentage de P₂O₅, réduite par calcul de 3,0 points de pourcentage, de la masse sèche du produit à base de boue (5) est plus de (2+z) fois plus grande que la part en pourcentage d'azote, réduite par calcul de 1,5 points de pourcentage, de la masse sèche du produit à base de boue (5), z étant un coefficient de sécurité de 0,1, 0,2, 0,3, 0,4 ou 0,5.

9. Procédé (1) selon l'une des revendications 6 à 8, **caractérisé en ce que** le traitement biologique de la boue (2) comprend
- une transformation en humus dans un bac de compostage couvert de plantes (12) et/ou
- un compostage et/ou
- un déversement (14) sur un tas et/ou
- une conversion (15) et/ou
- une évacuation (14) de la masse verte et/ou
- un broyage et une incorporation de la masse verte évacuée (15) et/ou
- une élimination de la masse verte évacuée (15).

10. Procédé (1) selon l'une des revendications 6 à 9, **caractérisé en ce que** la boue (2) est ensemencée avec des graines ou des rhizomes de plantes.

11. Procédé (1) selon la revendication 10, **caractérisé en ce que** la boue (2) est ensemencée avec des graines de colza ou de moutarde.

12. Procédé (1) selon l'une des revendications 6 à 11, **caractérisé en ce que**, pendant le traitement biologique de la boue (2), aucune substance contenant du phosphore n'est extraite.

13. Procédé (1) selon l'une des revendications 6 à 12, **caractérisé en ce qu'**aucun phosphate n'est ajouté à la boue (2) et au produit à base de boue (5).

14. Procédé (1) selon l'une des revendications 6 à 13, **caractérisé en ce que** le produit à base de boue (5) est broyé avant ou lors du mélange (10) avec l'additif minéral.

15. Procédé (1) selon l'une des revendications 6 à 14, **caractérisé en ce que** l'additif minéral est du carbonate de calcium (8), de la chaux vive, de la chaux mixte, de la chaux métallurgique, de la chaux d'aciérie ou de la chaux agricole.
